(19) Europäisches Patentamt
European Patent Office
Office européen des brevets

(11) **EP 1 936 952 A2**

(12) **EUROPEAN PATENT APPLICATION**

(43) Date of publication:
**25.06.2008 Bulletin 2008/26**

(51) Int Cl.:
***H04N 1/60*** *(2006.01)*

(21) Application number: **07122175.8**

(22) Date of filing: **03.12.2007**

| | |
|---|---|
| (84) Designated Contracting States: **AT BE BG CH CY CZ DE DK EE ES FI FR GB GR HU IE IS IT LI LT LU LV MC MT NL PL PT RO SE SI SK TR** Designated Extension States: **AL BA HR MK RS** | (71) Applicant: **Samsung Electronics Co., Ltd.** **Suwon-si, Gyeonggi-do 442-742 (KR)** |
| (30) Priority: **08.12.2006 KR 20060124791** **28.08.2007 KR 20070086583** | (72) Inventor: **Lim, Sung-hyun** **Seoul (KR)** (74) Representative: **Waddington, Richard** **Appleyard Lees** **15 Clare Road** **Halifax, Yorkshire HX1 2HY (GB)** |

(54) **Image forming apparatus and image quality improving method thereof**

(57)     An image forming apparatus includes a color converting part (130) to convert an RGB color data of each pixel in a predetermined size block including an object pixel to a luminance information and a color difference information to be output, a color object detecting part (150) to determine whether the object pixel is a color object pixel using a distribution characteristic of the color difference information of the block, and an image quality improving part (120) to change the RGB color data of the object pixel if the object pixel is not the color object pixel.

## FIG. 2

EP 1 936 952 A2

**Description**

1. Field of the Invention

The present general inventive concept relates to an image forming apparatus and an image quality improving method thereof, and more particularly, to an image forming apparatus which is capable of preventing image quality from deteriorating in edges of characters or black lines, and an image quality improving method thereof.

2. Description of the Related Art

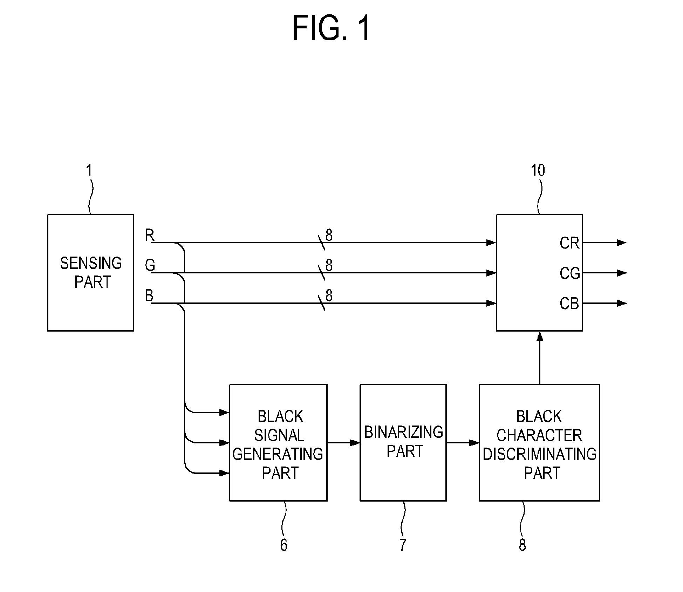

An image forming apparatus includes a color scanner, a color copier, a color printer, a color facsimile machine, a multifunction copier and other devices which facilitate image forming. U.S. Patent Registration No. 6,937,756 discloses an image forming apparatus that improves a quality of character image in black from an input image acquired by an image sensor. FIG. 1 is a block diagram illustrating a configuration of a conventional image forming apparatus that improves image quality, as an embodiment disclosed in U.S. Patent Registration No. 6,937,756.

As illustrated in FIG. 1, the conventional image forming apparatus includes a black signal generating part 6, a binarizing part 7, and a black character discriminating part 8 for improving a quality of black character images. The black signal generating part 6 detects an image in black having a small difference in brightness between red color (R), green color (G) and blue color (B). Here, a character in halftone black is not detected. The binarizing part 7 binarizes the image in black detected by the black signal generating part 6 and stores the binarized image in black in a memory. The black character discriminating part 8 discriminates a black character using binary codes of adjacent pixels which are stored in the memory of the binarizing part 7.

That is, the conventional image forming apparatus illustrated in FIG. 1 detects a character in continuous black tone and a character in halftone black using a two-step method. Specifically, the character in continuous black tone is detected by comparing a brightness difference between RGB colors with a reference threshold value and the character in halftone black is detected by measuring a degree of variation of a result of the detection of the character in continuous black tone.

Although the above method is useful if there is only an insignificant distortion in a scanned manuscript, the above method is very likely to fail in detecting the character in continuous black tone if there is significant distortion in the scanned manuscript. In addition, if the above method is employed when there is a significant brightness difference between RGB colors in the character of black continuous tone or a line edge due to excessive motor vibration such as automatic document scan, since the bright difference between RGB colors exceeds the reference threshold value, it is not possible to recognize the character in black continuous tone.

SUMMARY OF THE INVENTION

The present general inventive concept provides an image forming apparatus which is capable of improving image quality of a scanned image by correcting a distortion occurring in a scan operation, and an image quality improving method thereof.

The present general inventive concept also provides an image forming apparatus which is capable of preventing image quality from deteriorating in edges of characters or black lines, and an image quality improving method thereof.

Additional aspects and utilities of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

According to an aspect of the present invention there is provided an image forming apparatus comprising a color converting part to convert RGB color data of each pixel in a predetermined size block comprising an object pixel to luminance information and color difference information to be output, a color object detecting part to determine whether the object pixel is a color object pixel using a distribution characteristic of the color difference information of the block, and an image quality improving part to change the RGB color data of the object pixel if the object pixel is not the color object pixel.

The color object detecting part may divide a coordinate system corresponding to the distribution characteristic of the color difference information of the block into four or eight domains and may determine whether the object pixel is the color object pixel using a number of the pixels corresponding to the color difference information of the block distributed in maximum in one domain.

If the coordinate system is divided into eight domains and if a probability that the number of the pixels corresponding to the color difference information of the block distributed in maximum in one domain is above 4/9, the color object detecting part may determine the object pixel to be the color object image.

If the coordinate system is divided into four domains, and if a probability that the number of the pixels corresponding to the color difference information of the block distributed in maximum in one domain is above 8/9, the color object detecting part may determine the object pixel to be the color object image.

The image forming apparatus may further comprise a halftone image detecting part to compare a saturation value with a saturation threshold value and to remove a distorted halftone image.

The halftone image detecting part may vary the saturation threshold value to determine whether the object pixel is an achromatic pixel, depending on a difference between the maximum value and the minimum value of the luminance information of the block.

The halftone image detecting part may increase the saturation threshold value by the difference between the maximum value and the minimum value of the luminance information of the block.

The halftone image detecting part may perform a smoothing process corresponding to the RGB color data of each pixel of the block.

The halftone image detecting part may smooth the RGB color data of each pixel of the block to an average RGB color data by means of a low pass filter having the size of the block.

The halftone image detecting part may convert the average RGB color data to an average luminance information and an average color difference information, and may calculate the saturation value using the average color difference information.

The halftone image detecting part may calculate the saturation value according to the following equation using the average color difference information,

$$\mathtt{Csat} \ = \ |\mathtt{Cb2}| \ + \ |\mathtt{Cr2}|$$

where Csat is the saturation value and Cb2 and Cr2 are the average color difference information.

The halftone image detecting part may calculate the saturation value according to the following equation using the average color difference information,

$$\mathtt{Csat} \ = \ \sqrt{Cb2^2 + Cr2^2}$$

where Csat is the saturation value and Cb2 and Cr2 are the average color difference information.

The color converting part may use a block having a size of $3 \times 3$ pixels.

The image forming apparatus may further comprise a luminance variation detecting part to calculate a difference between the maximum value and the minimum value of the luminance information of the block, and to output a conversion flag as 0 so that the image quality improving part does not change the RGB color data of the object pixel if the difference is smaller than a luminance threshold value.

The image forming apparatus may further comprise a black edge determining part that has a mask having a predetermined size centered at the object pixel and may determine the object pixel to be a black object pixel if the number of the conversion flags having values 1 that are output from the color object detecting part through the mask is larger than an edge threshold value.

The image quality improving part may change the RGB color data of the object pixel to the same value if the object pixel is not the color object pixel.

The image quality improving part may calculate an average value of the RGB color data of the object pixel and may change the RGB color data of the object pixel to the average value.

If the object pixel is represented by the luminance information and the color difference information, the image quality improving part changes the color difference information of the object pixel to 0 and converts the luminance information and the changed color difference information of the object pixel to RGB color data to be output.

According to another aspect of the present invention there is provided an image quality improving method of an image forming apparatus, comprising converting an RGB color data of each pixel in a predetermined size comprising an object pixel to a luminance information and a color difference information to be outputted, determining whether the object pixel is a color object pixel using a distribution characteristic of the color difference information of the block, and changing the RGB color data of the object pixel if the object pixel is not the color object pixel.

The image quality improving method may further comprise determining whether the object pixel is the color object pixel comprises dividing a coordinate system for the distribution characteristic of the color difference information of the block into four or eight domains and determining whether the object pixel is the color object pixel using a number of the pixels corresponding to the color difference information of the block distributed in maximum in one domain.

The image quality improving method may further comprise calculating a difference between the maximum value and the minimum value of the luminance information of the block, and outputting a conversion flag as 0 so that the image quality improving part does not change the RGB color data of the object pixel if the difference is smaller than a luminance threshold value.

The image quality improving method may further comprise comparing a saturation value with a saturation threshold value and removing a distorted halftone image.

The removing the distorted halftone image may comprise smoothing the RGB color data of each pixel of the block to an average RGB color data by means of a low pass filter having the size of the block.

The removing the distorted halftone image may comprise converting the average RGB color data to an average luminance information and an average color difference information, and calculating the saturation value using the average color difference information.

The removing the distorted halftone image may comprise varying the saturation threshold value to determine whether the object pixel is an achromatic pixel, depending on a difference between the maximum value and the minimum value of the luminance information of the block.

The varying the saturation threshold value may comprise increasing the saturation threshold value with increase of the difference between the maximum value and the minimum value of the luminance information of the block.

The image quality improving method may further comprise providing a mask having a predetermined size centered at the object pixel and determining the object pixel to be a black object pixel if a number of the conversion flags having values 1 that are output from the color object detecting part through the mask is larger than an edge threshold value.

The changing the RGB color data of the object pixel may comprise changing the RGB color data of the object pixel to the same value if the object pixel is determined to be the black object pixel.

The changing the RGB color data of the object pixel may comprise, if the object pixel is finally determined to be the black object pixel and if the object pixel is represented by the luminance information and the color difference information, changing the color difference information of the object pixel to 0.

According to another aspect of the present invention there is provided an image forming apparatus, comprising a color object detecting part to determine whether an object pixel in a predetermined size block is a color object pixel based on luminance information and color information of the object pixel, and an image quality improving part to change RGB color data of the object pixel if the object pixel is not the color object pixel.

The image forming apparatus may further comprise a luminance variation detecting part to detect a luminance change of pixels adjacent to the object pixel to determine if image quality of the object pixel needs to be improved.

The luminance variation detecting part may determine if image quality of the object pixel needs to be improved by calculating a difference between a minimum value and a maximum value of the luminance information of all pixels in the predetermined size block.

The color object detecting part may divide the predetermined size block into a predetermined number of domains and determines whether a number of pixels in one of the domains is larger than a predetermined threshold value.

The predetermined threshold value may be a median of a number of pixels in the predetermined size block.

According to another aspect of the present invention there is provided an image quality improving method of an image forming apparatus, the method comprising determining whether an object pixel in a predetermined size block is a color object pixel based on luminance information and color information of the object pixel, and changing RGB color data of the object pixel if the object pixel is not the color object pixel.

The method may further comprise detecting a luminance change of pixels adjacent to the object pixel to determine if image quality of the object pixel needs to be improved.

The method may further comprise calculating a difference between a minimum value and a maximum value of the luminance information of all pixels in the predetermined size block to determine if image quality of the object pixel needs to be improved.

The method may further comprise dividing the predetermined size block into a predetermined number of domains, and determining whether a number of pixels in one of the domains is larger than a predetermined threshold value.

The predetermined threshold value may be a median of a number of pixels in the predetermined size block.

According to another aspect of the present invention there is provided a computer readable recording medium having embodied thereon a computer program to execute a method, wherein the method comprises converting an RGB color data of each pixel in a predetermined size comprising an object pixel to a luminance information and a color difference information to be output, determining whether the object pixel is a color object pixel using a distribution characteristic of the color difference information of the block, and changing the RGB color data of the object pixel if the object pixel is not the color object pixel.

According to another aspect of the present invention there is provided an image forming apparatus, comprising a color converting part to convert color data of a first color format into color data of a second color format; and an image quality improving part to adjust the color data of the first color format according to a characteristic of an object pixel of the color image data of the first color format and a distribution characteristic of the color data of the second color format, so that an edge of an image of the color data of the first color format is prevented from being deteriorated.

BRIEF DESCRIPTION OF THE DRAWINGS

These and/or other aspects and utilities of the present general inventive concept will become apparent and more readily appreciated from the following description of the exemplary embodiments, taken in conjunction with the accompanying drawings, in which:

FIG. 1 is a block diagram illustrating a configuration of a conventional image forming apparatus that improves image quality;

FIG. 2 is a block diagram illustrating a configuration of an image forming apparatus according to an exemplary embodiment of the present general inventive concept;

FIG. 3 is a block diagram illustrating details of a halftone image detecting part of FIG. 2;

FIG. 4 is a flow chart illustrating an image quality improving method of the image forming apparatus according to an exemplary embodiment of the present general inventive concept;

FIGS. 5A and 5B are views illustrating an image before and after performing a smoothing operation in a color smoothing processing part of FIG. 3, respectively;

FIG. 6 is a view illustrating one example of a saturation threshold curve in a saturation threshold calculating part of FIG. 3;

FIGS. 7A and 7B are views illustrating examples of a color difference information distribution in a color object detecting part of FIG. 2; and

FIGS. 8A and 8B are views illustrating an example of a mask used in a black edge determining part of FIG. 2 and an example of values of conversion flags output from a color difference information distribution in a color object detecting part of FIG. 2, respectively.

DETAILED DESCRIPTION OF THE PREFERRED EMBODIMENTS

Reference will now be made in detail to the embodiments of the present general inventive concept general inventive concept, examples of which are illustrated in the accompanying drawings, wherein like reference numerals refer to like elements throughout. The exemplary embodiments are described below so as to explain the present general inventive concept by referring to the figures.

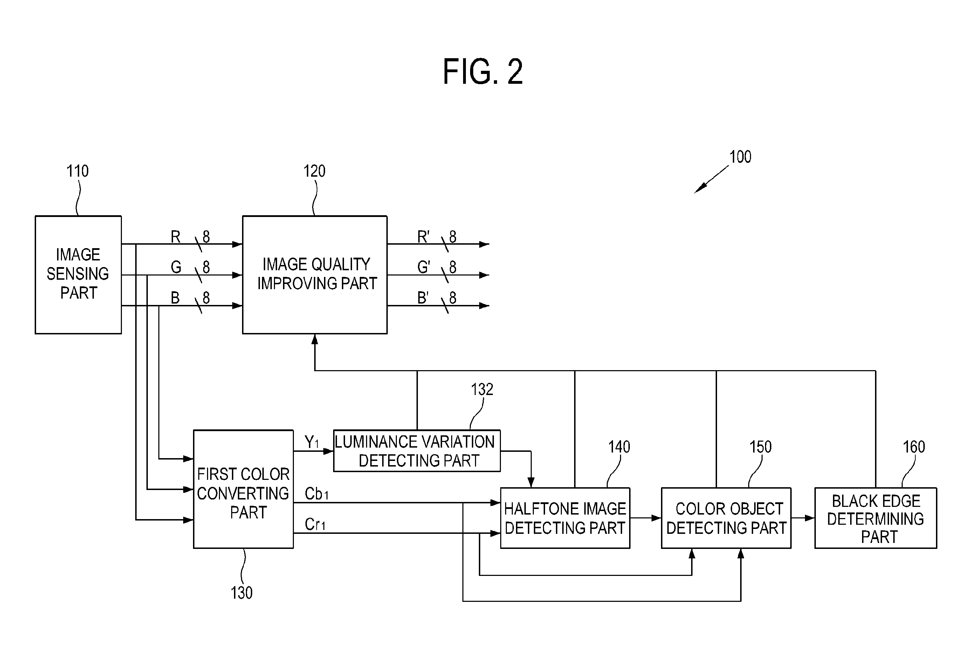

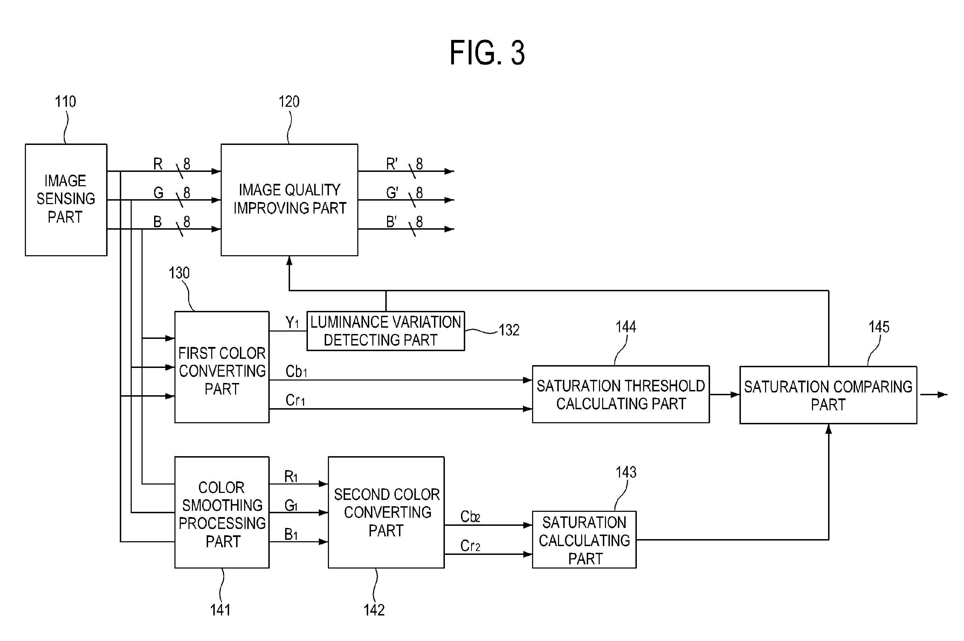

FIG. 2 is a block diagram illustrating a configuration of an image forming apparatus 100 according to an exemplary embodiment of the present general inventive concept, and FIG. 3 is a block diagram illustrating details of a halftone image detecting part 140 of FIG. 2.

As illustrated in FIG. 2, the image forming apparatus 100 comprises an image sensing part 110, an image quality improving part 120, a first color converting part 130, a luminance variation detecting part 132, the halftone image detecting part 140, a color object detecting part 150 and a black edge determining part 160 to prevent image quality from deteriorating in a character or a line edge in black.

The image sensing part 110 scans a copy object to generate color data R, G and B (hereinafter referred to as an 'RGB color data') of an input image comprising a plurality of pixels. An image sensor of the image sensing part 110 employs a charge coupled device (CCD) or a complementary metal oxide semiconductor (CMOS). The image sensing part 110 may further comprise a memory to store the RGB color data of the input image which is generated by the image sensor.

The image quality improving part 120 changes or maintains the RGB color data of an object pixel input from the image sensing part 110, based on values of conversion flags B of the luminance variation detecting part 132, the halftone image detecting part 140, the color object detecting part 150 and the black edge determining part 160, in order to acquire a clear and smooth edge of black color which is generated due to removal of a distortion. That is, if the values of the conversion flags B output from the luminance variation detecting part 132, the halftone image detecting part 140, the color object detecting part 150 and the black edge determining part 160 are 0, the image quality improving part 120 outputs the RGB color data of the input object pixel as R'G'B' color data. If the values of the conversion flags B are 1, which indicates that the object pixel does not correspond to a color pixel but an edge of a character in black, etc., the image quality improving part 120 changes and outputs the RGB color data of the object pixel as R'G'B color data.

Accordingly, if the values of the conversion flags B are 1, the image quality improving part 120 changes the RGB color data of the object pixel to have a same value which is RGB color data. To this end, the image quality improving part 120 calculates an average value of the RGB color data of the object pixel and may change the RGB color data of the object pixel to the average value. For example, if R color data of the RGB color data of the object pixel is 100, G color data is 80 and B color data is 60, an average value thereof is calculated to be 80 (i.e., (100+80+60) / 3 = 80), and accordingly, the R, G and B color data are changed to 80. In addition, if the input image has YCbCr data or the RGB color data input to the image quality improving part 120 are converted to YCbCr data represented by luminance information Y1 and color difference information Cb and Cr of the object image, and if the values of the conversion flags B are 1, the image quality improving part 120 changes the color difference information Cb and Cr to be 0 with the luminance information Y1 unchanged. Then, the image quality improving part 120 may convert the unchanged luminance information and the changed color difference information to the RGB color data to be output.

The first color converting part 130 converts the RGB color data of each of a plurality of pixels of a block having a predetermined size including the object pixel to the luminance information Y1 and the color difference information Cb1 and Cr1 to be output. In the present embodiment, the block has a size of 3×3 pixels. The first color converting part 130 converts the input R, G and B data of each pixel represented by values of 0-255 to the luminance information Y1 having a value 0-255 and the color difference information Cb1 and Cr1 having a value of -128-127 to be output.

The luminance variation detecting part 132 detects luminance changes of neighboring pixels including the object pixel in order to determine whether image quality of the object pixel needs to be improved. Specifically, the luminance change detecting part 132 calculates a difference between the maximum value and the minimum value of the luminance information of the 3×3 pixels, the image quality improving part 120 sets the values of the conversion flags to be 0, so that the RGB color data of the object pixel are not changed if the difference is smaller than a luminance threshold value, and the halftone image detecting part 140 determines whether to change the RGB color data of the object pixel if the difference is larger than the luminance threshold value, that is, if the luminance change is large.

A method of detecting the luminance variation may include a Sobel operator method, a Laplician operator method, and methods known in the art, in addition to the above-mentioned method using the difference between the maximum value and the minimum value of the luminance information.

Referring to FIG. 3, the halftone image detecting part 140 comprises a color smoothing processing part 141, a second color converting part 142, a saturation calculating part 143, a saturation threshold calculating part 144 and a saturation comparing part 145 to distinguish between an actual edge in a continuous black tone and an edge image in a black halftone. The halftone image detecting part 140 compares a saturation value with a saturation threshold value in order to remove a distorted halftone image. In addition, the halftone image detecting part 140 may vary the saturation threshold value to determine whether the object pixel is an achromatic pixel, depending on the difference between the maximum value and the minimum value of the luminance information of the block, which was calculated by the luminance change detecting part 132. Accordingly, the halftone image refers to an image recognized as a noise differently from an actual image. For example, if a scanner having high resolution of more than 3000 DPI (Dot Per Inch) scans a document, the halftone image is a noise image whose brightness is changed dependent on a line interval of the image sensor in an image region having constant luminance.

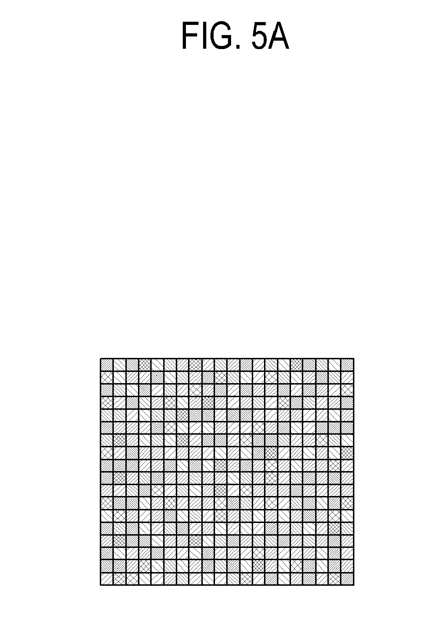

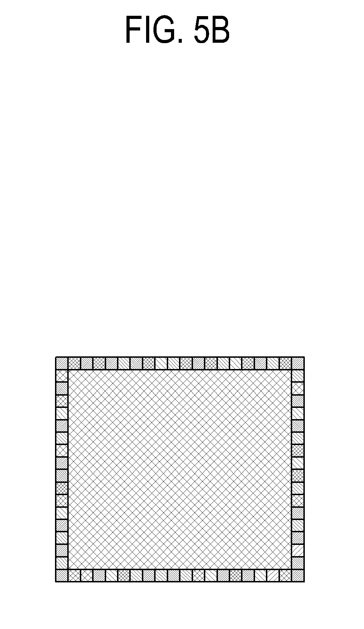

The color smoothing processing part 141 performs a smoothing process corresponding to the RGB color data of an input image by means of a low pass filter of, for example, a block of 3×3 pixels. Accordingly, the low pass filer refers to a spatial filter, which may also be called a mask. The low pass filter can reduce errors which may occur when a halftone image is removed, by converting the halftone to be similar to a continuous tone image. That is, an average RGB color data R1, G1 and B1 can be obtained when values corresponding to the 3×3 pixels with their center at an object pixel are added to the input image and then divided by 9. FIGS. 5A and 5B illustrate examples of images before and after performing the smoothing process in the color smoothing processing part 141, respectively.

The second color converting part 142 converts the average RGB color data R1, G1 and B1 output from the color smoothing processing part 141 to average luminance information and average color difference information Cb2 and Cr2.

The saturation calculating part 143 calculates a saturation value Csat of a pixel in order to determine proximity of the object pixel to the achromatic pixel. The saturation calculating part 143 calculates the saturation value Csat using the average color difference information Cb2 and Cr2. Specifically, the saturation value Csat may be calculated as a sum of absolute values of the average color difference information Cb2 and Cr2 according to the following equation 1.

[EQUATION 1]

$$Csat = |Cb2| + |Cr2| \ ... \ (1)$$

In addition, the saturation value Csat may be calculated as a root mean square of the average color difference information Cb2 and Cr2 according to the following equation 2.

[EQUATION 2]

$$\text{Csat} = \sqrt{Cb2^2 + Cr2^2} \quad \dots \quad (2)$$

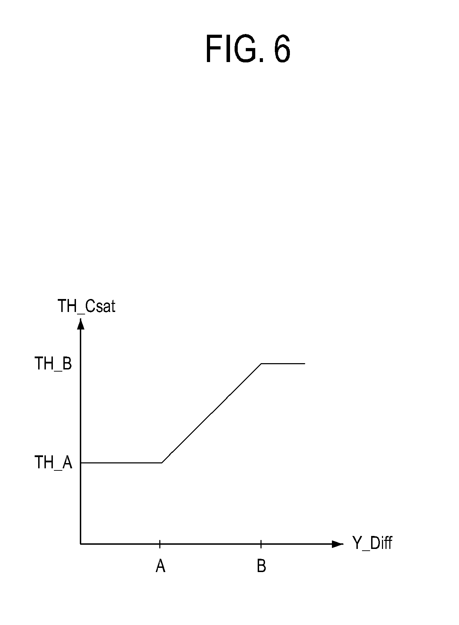

The saturation threshold calculating part 144 calculates a saturation threshold value to determine whether the object pixel is an achromatic pixel. FIG. 6 illustrates an example of calculating the saturation threshold value. As illustrated in FIG. 6, the saturation threshold value TH_Csat may vary depending on a luminance difference Y_diff. That is, the saturation threshold value may be increased by the difference between the maximum value and the minimum value of the luminance information of the block. This prevents distortion from occurring due to a large luminance difference between a foreground region and a background region. Accordingly, the luminance difference Y_diff refers to the difference between the maximum value and the minimum value of the luminance information of the $3\times3$ pixels.

The saturation comparing part 145 compares the saturation threshold value calculated in the saturation threshold calculating part 144 with the saturation value Csat calculated in the saturation calculating part 143. As a result of the above comparison, if the saturation value Csat is larger than the saturation threshold value, the image quality improving part 120 sets the values of the conversion flags to be 0 so that the RGB color data of the object pixel is not changed, and if the saturation value Csat is smaller than the saturation threshold value, the color object detecting part 150 determines whether to change the RGB color data of the object pixel.

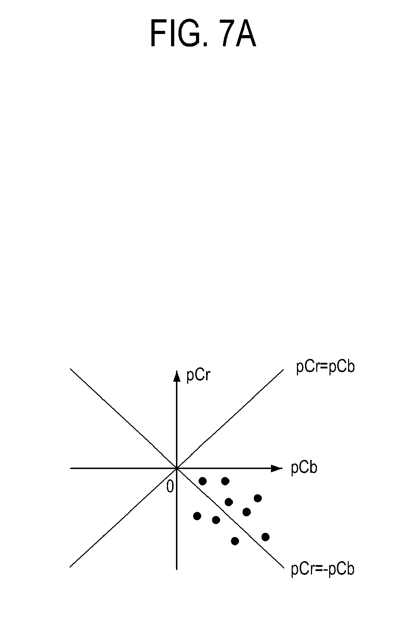

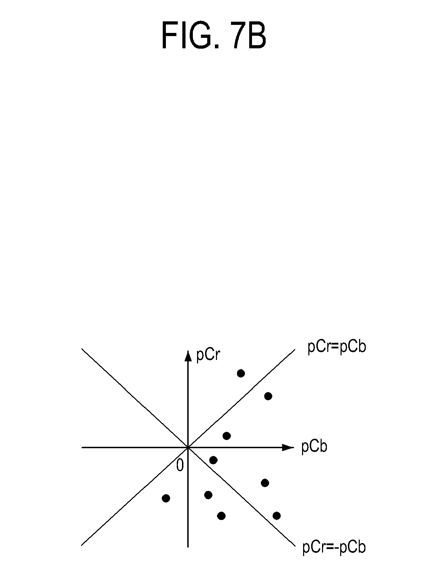

The color object detecting part 150 detects whether the object pixel detected as an image of black continuous tone by the above-described configurations is a color object pixel. The color object detecting part 150 represents the color difference information Cb1 and Cr1 output from the first color converting part 130 as points on an XY coordinate system. That is, the color difference information of the $3\times3$ pixels are represented as 9 points on the XY coordinate system. FIGS. 7A and 7B illustrate examples of the color difference information distribution in the color object detecting part 150 of FIG. 2.

As illustrated in FIGS. 7A and 7B, a number of the pixels distributed in maximum in one domain, for example, 6 pixels in FIG. 7A and 3 pixels in FIG. 7B, among the domain defined by (Cb1>0, Cr1<0) and Cr1<0 and Cb1>-Cr1. When the number of the pixels distributed in one domain is large, a probability that the object pixel of an original image is a color object pixel other than a black object pixel increases. As illustrated in FIGS. 7A and 7B, assuming that the coordinate system is divided into 8 domains and a color threshold value is 4, a conversion flag is 0 in FIG. 7A since the number of the pixels distributed in maximum in one domain, (i.e., 6 pixels), is larger than the color threshold value of 4, while the conversion flag is 1 in FIG. 7B, since the number of the pixels distributed in maximum in one domain, (i.e., 3 pixels), is smaller than the color threshold value of 4. That is, if a probability that the number of the pixels corresponding to the color difference information of the block distributed in maximum in one domain is above 4/9, the object pixel is determined to be the color object image. In addition, when the coordinate system is divided into 4 domains, if a probability that the number of the pixels corresponding to the color difference information of the block distributed in maximum in one domain is above 8/9, the object pixel is determined to be the color object image.

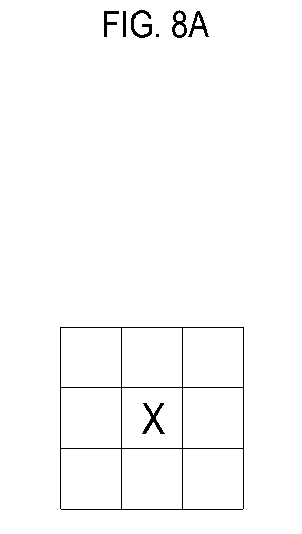

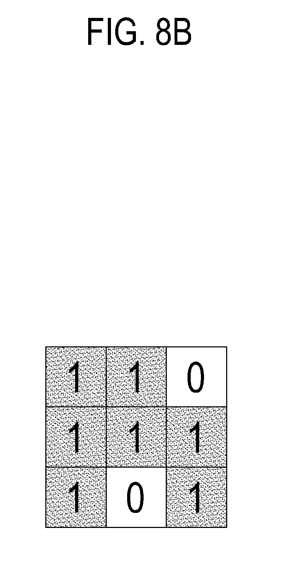

The black edge determining part 160 detects a black edge using the value of the conversion flag B output from the color object detecting part 150. FIG. 8A illustrates a mask used in the black edge determining part 160 and FIG. 8B illustrates an example of values of the conversion flags B output from the color object detecting part 150. If a number of conversion flags B having a value of 1 output from the color object detecting part 150 through the mask is larger than an edge threshold value, the object pixel is determined to be a black object pixel and the conversion flag B is finally output as 1. Otherwise, the object pixel is determined to not be the black object pixel, and the conversion flag B is changed to 0.

Although FIG. 2 illustrates that the image quality improving part 120 improves the image quality corresponding to the RGB color data of the input image generated in the image sensing part 110, the input image may be an image to be printed which is input to the image quality improving part 120. In addition, although FIG. 2 illustrates the block having the size of $3\times3$ pixels, the block may have different sizes of pixels. That is, the size of block may vary depending on resolution and output formats of the image sensing part 110.

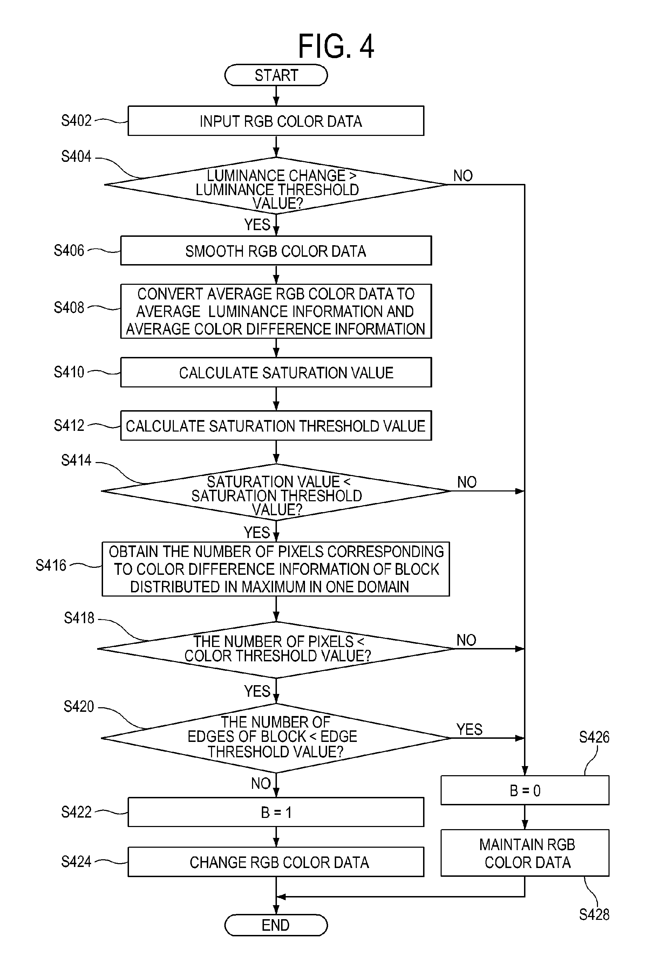

FIG. 4 is a flow chart illustrating an image quality improving method of the image forming apparatus according to an exemplary embodiment of the present general inventive concept.

Referring to FIGS. 2 through 4, the image sensing part 110 scans a copy object to generate RGB color data of an input image comprising a plurality of pixels. The first color converting part 130 converts the RGB color data of each pixel in a predetermined size block including an object pixel to the luminance information Y1 and the color difference information Cb1 and Cr1 to be output in operation S402.

The luminance variation detecting part 132 detects luminance difference between the neighboring pixels including the object pixel in order to determine whether image quality of the object pixel needs to be improved. Specifically, the luminance variation detecting part 132 calculates a difference between the maximum value and the minimum value of the luminance information of the block, and sets conversion flags to be 0 in the image quality improving part 120 so that the RGB color data of the object pixel are not changed if the difference is smaller than a luminance threshold value in operation S404.

If the difference is larger than a luminance threshold value in operation S404, the color smoothing processing part 141 performs a smoothing process corresponding to RGB color data of an input image by means of, for example, a low pass filter of a block of 3×3 pixels in operation S406. That is, average RGB color data R1, G1 and B1 can be obtained when values corresponding to the 3×3 pixels of the input image with the object pixel at their center are added and then divided by 9.

The second color converting part 142 converts the average RGB color data R1, G1 and B1 output from the color smoothing processing part 141 to average luminance information and average color difference information Cb2 and Cr2 in operation S408.

The saturation calculating part 143 calculates a saturation value Csat of a pixel in order to determine proximity of the object pixel to an achromatic pixel. The saturation calculating part 143 calculates the saturation value Csat using the average color difference information Cb2 and Cr2 in operation S410.

The saturation threshold calculating part 144 calculates a saturation threshold value to determine whether the object pixel is an achromatic pixel. The saturation threshold value may be increased by the difference between the maximum value and the minimum value of the luminance information of the block in operation S412.

The saturation comparing part 145 compares the saturation threshold value calculated in the saturation threshold calculating part 144 with the saturation value Csat calculated in the saturation calculating part 143 in operation S414. As a result of the comparison, if the saturation value Csat is larger than the saturation threshold value, the image quality improving part 120 sets the values of the conversion flags to be 0 so that the RGB color data of the object pixel are not changed in operation S426, and, if the saturation value Csat is smaller than the saturation threshold value, the color object detecting part 150 determines whether to change the RGB color data of the object pixel.

The color object detecting part 150 detects whether the object pixel detected as an image of continuous tone in black by the above-described operations is a color object pixel. That is, the number of the pixels corresponding to the color difference information of the black distributed in maximum in one domain is calculated in operation S416. The color object detecting part 150 determines whether the object pixel is the color object pixel using a distribution characteristic of the color difference information of the block in operation S418. To this end, an XY coordinate system is divided into 4 or 8 domains and the number of the pixels corresponding to the color difference information is distributed in maximum in one domain. For example, assuming that the coordinate system is divided into 8 domains and a color threshold value is 4, a conversion flag is 0 in FIG. 7A, since the number of the pixels distributed in maximum in one domain, i.e., 6, is larger than the color threshold value of 4, while the conversion flag is 1 in FIG. 7B since the number of the pixels distributed in maximum in one domain, i.e., 3, is smaller than the color threshold value of 4. That is, if a probability that the number of the pixels corresponding to the color difference information of the block distributed in maximum in one domain is above 4/9, the object pixel is determined to be the color object image. In addition, when the coordinate system is divided into 4 domains, if a probability that the number of the pixels corresponding to the color difference information of the block distributed in maximum in one domain is above 8/9, the object pixel is determined to be the color object image.

The black edge determining part 160 detects a black edge using the value of the conversion flag B output from the color object detecting part 150 in operation S420. If the number of conversion flags B having a value of 1 output from the color object detecting part 150 through the mask is larger than an edge threshold value, the object pixel is determined to be a black object pixel and the conversion flag B is finally output as 1. Otherwise, the object pixel is determined not to be the black object pixel and the conversion flag B is changed to 0.

When the values of the conversion flags B output from the luminance change detecting part 132, the halftone image detecting part 140, the color object detecting part 150 and the black edge determining part 160 are set to be 0 in operation S426, the image quality improving part 120 maintains the RGB color data of the object pixel unchanged in operation S428.

However, when the value of the conversion flag B finally output from the black edge determining part 160 is set to be 1 in operation S422, since the object pixel corresponds to an edge of a character in black, not a color pixel, the image quality improving part 120 changes the RGB color data of the object pixel in operation S424. Accordingly, an average value of the RGB color data of the object pixel may be calculated and the RGB color data of the object pixel may be changed to the average value. In addition, if the input image has YCbCr data or the RGB color data inputted to the image quality improving part 120 are converted to YCbCr data represented by luminance information Y and color difference information Cb and Cr, and if the values of the conversion flags B are 1, the image quality improving part 120 changes the color difference information Cb and Cr of the object pixel to be 0 with the luminance information Y unchanged.

As apparent from the above description, according to the present general inventive concept, image quality of a scan image can be improved by correcting distortion occurring in a scan operation.

In addition, according to the present general inventive concept, it is possible to prevent image quality from being deteriorated in edges of characters or lines in black.

Furthermore, according to the present general inventive concept, copy image quality can be improved by recognizing characters or lines in black and printing the recognized characters or lines in black using only black toner.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few exemplary embodiments of the present general inventive concept have been shown and described, it will be appreciated by those skilled in the art that changes may be made in these exemplary embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image forming apparatus comprising:

   a color converting part (130) to convert RGB color data of each pixel in a predetermined size block comprising an object pixel to luminance information and color difference information to be output;
   a color object detecting part (150) to determine whether the object pixel is a color object pixel using a distribution characteristic of the color difference information of the block; and
   an image quality improving part (120) to change the RGB color data of the object pixel if the object pixel is not the color object pixel.

2. The image forming apparatus according to claim 1, wherein the color object detecting part (150) divides a coordinate system corresponding to the distribution characteristic of the color difference information of the block into four or eight domains and determines whether the object pixel is the color object pixel using the number of the pixels corresponding to the color difference information of the block distributed in maximum in one domain.

3. The image forming apparatus according to claim 2, wherein if the coordinate system is divided into eight domains and if a probability that the number of the pixels corresponding to the color difference information of the block distributed in maximum in one domain is above 4/9, the color object detecting part (150) determines the object pixel to be the color object image.

4. The image forming apparatus according to claim 2, wherein, if the coordinate system is divided into four domains and if a probability that the number of the pixels corresponding to the color difference information of the block distributed in maximum in one domain is above 8/9, the color object detecting part (150) determines the object pixel to be the color object image.

5. The image forming apparatus according to any preceding claim, further comprising a halftone image detecting part (140) to compare a saturation value with a saturation threshold value and to remove a distorted halftone image.

6. The image forming apparatus according to claim 5, wherein the halftone image detecting part (140) varies the saturation threshold value to determine whether the object pixel is an achromatic pixel, depending on a difference between the maximum value and the minimum value of the luminance information of the block.

7. The image forming apparatus according to claim 6, wherein the halftone image detecting part (140) increases the saturation threshold value by the difference between the maximum value and the minimum value of the luminance information of the block.

8. The image forming apparatus according to claim 7, wherein the halftone image detecting part (140) performs a smoothing process corresponding to the RGB color data of each pixel of the block.

9. The image forming apparatus according to claim 8, wherein the halftone image detecting part (140) smoothes the RGB color data of each pixel of the block to an average RGB color data by means of a low pass filter having the size of the block.

10. The image forming apparatus according to claim 9, wherein the halftone image detecting part (140) converts the average RGB color data to an average luminance information and an average color difference information, and calculates a saturation value using the average color difference information.

11. The image forming apparatus according to claim 10, wherein the halftone image detecting part (140) calculates the saturation value according to the following equation using the average color difference information,

$$\texttt{Csat} \; = \; |\texttt{Cb2}| \; + \; |\texttt{Cr2}|$$

where Csat is the saturation value, and Cb2 and Cr2 are the average color difference information.

12. The image forming apparatus according to claim 10, wherein the halftone image detecting part (140) calculates the saturation value according to the following equation using the average color difference information,

$$\texttt{Csat} \; = \; \sqrt{Cb2^2 + Cr2^2}$$

where Csat is the saturation value, and Cb2 and Cr2 are the average color difference information.

13. The image forming apparatus according to any preceding claim, wherein the color converting part (130) uses a block having a size of $3 \times 3$ pixels.

14. The image forming apparatus according to any preceding claim, further comprising a luminance variation detecting (132) part to calculate a difference between a maximum value and a minimum value of the luminance information of the block, and to output a conversion flag as 0 so that the image quality improving part (120) does not change the RGB color data of the object pixel if the difference is smaller than a luminance threshold value.

15. The image forming apparatus according to any preceding claim, further comprising a black edge determining part (160) that has a mask having a predetermined size centered at the object pixel and determines the object pixel to be a black object pixel if the number of the conversion flags having values 1 that are output from the color object detecting part (150) through the mask is larger than an edge threshold value.

16. The image forming apparatus according to any preceding claim, wherein the image quality improving part (120) changes the RGB color data of the object pixel to the same value if the object pixel is not the color object pixel.

17. The image forming apparatus according to claim 16, wherein the image quality improving part (120) calculates an average value of the RGB color data of the object pixel and changes the RGB color data of the object pixel to the average value.

18. The image forming apparatus according to claim 16, wherein, if the object pixel is represented by the luminance information and the color difference information, the image quality improving part (120) changes the color difference information of the object pixel to 0 and converts the luminance information and the changed color difference information of the object pixel to RGB color data to be output.

19. An image quality improving method of an image forming apparatus, comprising:

converting an RGB color data of each pixel in a predetermined size comprising an object pixel to a luminance information and a color difference information to be output;
determining whether the object pixel is a color object pixel using a distribution characteristic of the color difference information of the block; and
changing the RGB color data of the object pixel if the object pixel is not the color object pixel.

20. The image quality improving method according to claim 19, wherein determining whether the object pixel is the color object pixel comprises:

dividing a coordinate system corresponding to the distribution characteristic of the color difference information of the block into four or eight domains; and
determining whether the object pixel is the color object pixel using the number of the pixels corresponding to the color difference information of the block distributed in maximum in one domain.

21. The image quality improving method according to claim 19, further comprising:

calculating a difference between a maximum value and a minimum value of the luminance information of the block; and
outputting a conversion flag as 0 so that the image quality improving part (120) does not change the RGB color data of the object pixel if the difference is smaller than a luminance threshold value.

22. The image quality improving method according to claim 21, further comprising:

comparing a saturation value with a saturation threshold value; and
removing a distorted halftone image.

23. The image quality improving method according to claim 22, wherein the removing the distorted halftone image comprises:

smoothing the RGB color data of each pixel of the block to an average RGB color data by means of a low pass filter having the size of the block.

24. The image quality improving method according to claim 23, wherein the removing the distorted halftone image comprises:

converting the average RGB color data to an average luminance information and an average color difference information; and
calculating the saturation value using the average color difference information.

25. The image quality improving method according to claim 24, wherein the removing the distorted halftone image comprises varying the saturation threshold value to determine whether the object pixel is an achromatic pixel, depending on a difference between the maximum value and the minimum value of the luminance information of the block.

26. The image quality improving method according to claim 25, wherein the varying the saturation threshold value comprises increasing the saturation threshold value with increase of the difference between the maximum value and the minimum value of the luminance information of the block.

27. The image quality improving method according to claim 21, further comprising providing a mask having a predetermined size centered at the object pixel and determining the object pixel to be a black object pixel if the number of the conversion flags having values 1 that are output from the color object detecting part (150) through the mask is larger than an edge threshold value.

28. The image quality improving method according to claim 27, wherein the changing the RGB color data of the object pixel comprises changing the RGB color data of the object pixel to a same value if the object pixel is determined to be the black object pixel.

29. The image quality improving method according to claim 27, wherein the changing the RGB color data of the object pixel comprises changing the color difference information of the object pixel to 0 if the object pixel is finally determined to be the black object pixel and if the object pixel is represented by the luminance information and the color difference information.

30. An image forming apparatus, comprising:

a color object detecting part (150) to determine whether an object pixel in a predetermined size block is a color object pixel based on luminance information and color information of the object pixel; and
an image quality improving part (120) to change RGB color data of the object pixel if the object pixel is not the color object pixel.

31. The image forming apparatus of claim 30, further comprising a luminance variation detecting (132) part to detect a luminance change of pixels adjacent to the object pixel to determine if image quality of the object pixel needs to be improved.

32. The image forming apparatus of claim 31, wherein the luminance variation detecting (132) part determines if image quality of the object pixel needs to be improved by calculating a difference between a minimum value and a maximum value of the luminance information of all pixels in the predetermined size block.

33. The image forming apparatus of claim 30, wherein the color object detecting part (150) divides the predetermined size block into a predetermined number of domains and determines whether a number of pixels in one of the domains is larger than a predetermined threshold value.

34. The image forming apparatus of claim 33, wherein the predetermined threshold value is a median of a number of pixels in the predetermined size block.

35. An image quality improving method of an image forming apparatus, the method comprising:

determining whether an object pixel in a predetermined size block is a color object pixel based on luminance information and color information of the object pixel; and
changing RGB color data of the object pixel if the object pixel is not the color object pixel.

36. The method of claim 35, further comprising detecting a luminance change of pixels adjacent to the object pixel to determine if image quality of the object pixel needs to be improved.

37. The method of claim 36, further comprising calculating a difference between a minimum value and a maximum value of the luminance information of all pixels in the predetermined size block to determine if image quality of the object pixel needs to be improved.

38. The method of claim 35, further comprising:

dividing the predetermined size block into a predetermined number of domains; and
determining whether a number of pixels in one of the domains is larger than a predetermined threshold value.

39. The method of claim 38, wherein the predetermined threshold value is a median of a number of pixels in the predetermined size block.

40. A computer readable recording medium having embodied thereon a computer program to execute a method, wherein the method comprises:

converting an RGB color data of each pixel in a predetermined size comprising an object pixel to a luminance information and a color difference information to be output;

determining whether the object pixel is a color object pixel using a distribution characteristic of the color difference information of the block; and

changing the RGB color data of the object pixel if the object pixel is not the color object pixel.

41. An image forming apparatus, comprising:

a color converting part (130) to convert color data of a first color format into color data of a second color format; and

an image quality improving part (120) to adjust the color data of the first color format according to a characteristic of an object pixel of the color image data of the first color format and a distribution characteristic of the color data of the second color format, so that an edge of an image of the color data of the first color format is prevented from being deteriorated.

# FIG. 1

# FIG. 2

- 110 — IMAGE SENSING PART
- 120 — IMAGE QUALITY IMPROVING PART
- 130 — FIRST COLOR CONVERTING PART
- 132 — LUMINANCE VARIATION DETECTING PART
- 140 — HALFTONE IMAGE DETECTING PART
- 150 — COLOR OBJECT DETECTING PART
- 160 — BLACK EDGE DETERMINING PART

R 8  G 8  B 8

R' 8  G' 8  B' 8

$Y_1$  $Cb_1$  $Cr_1$

100

# FIG. 3

# FIG. 4

START

S402 — INPUT RGB COLOR DATA

S404 — LUMINANCE CHANGE > LUMINANCE THRESHOLD VALUE? — NO

YES

S406 — SMOOTH RGB COLOR DATA

S408 — CONVERT AVERAGE RGB COLOR DATA TO AVERAGE LUMINANCE INFORMATION AND AVERAGE COLOR DIFFERENCE INFORMATION

S410 — CALCULATE SATURATION VALUE

S412 — CALCULATE SATURATION THRESHOLD VALUE

S414 — SATURATION VALUE < SATURATION THRESHOLD VALUE? — NO

YES

S416 — OBTAIN THE NUMBER OF PIXELS CORRESPONDING TO COLOR DIFFERENCE INFORMATION OF BLOCK DISTRIBUTED IN MAXIMUM IN ONE DOMAIN

S418 — THE NUMBER OF PIXELS < COLOR THRESHOLD VALUE? — NO

YES

S420 — THE NUMBER OF EDGES OF BLOCK < EDGE THRESHOLD VALUE? — YES

NO

S426 — B = 0

S422 — B = 1

S424 — CHANGE RGB COLOR DATA

S428 — MAINTAIN RGB COLOR DATA

END

# FIG. 5A

# FIG. 5B

# FIG. 6

# FIG. 7A

# FIG. 7B

# FIG. 8A

| | | |
|---|---|---|
| | | |
| | X | |
| | | |

# FIG. 8B

| 1 | 1 | 0 |
|---|---|---|
| 1 | 1 | 1 |
| 1 | 0 | 1 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6937756 B